# FASCICULE DE BREVET EUROPEEN

(11) **EP 2 038 238 B1**
(45) Date de publication et mention de la délivrance du brevet: **14.12.2011**
(21) Numéro de dépôt: 07729617.6
(22) Date de dépôt: 29.05.2007
(51) Int. Cl.: C04B 35/56

(54) **POUDRES DE PHASE MAX ET PROCEDE DE FABRICATION DESDITES POUDRES**
MAX-PHASE-PULVER UND HERSTELLUNGSVERFAHREN DAFÜR
MAX-PHASE POWDERS AND METHOD FOR MAKING SAME

(30) Priorité: 30.05.2006 FR 0651960
(43) Date de publication de la demande: 25.03.2009
(73) Titulaire: Commissariat à l'Énergie Atomique et aux Énergies Alternatives, 75015 Paris (FR)
(72) Inventeur: CANEL, Jérôme, F-94270 Le Kremlin-bicetre (FR); TENEGAL, François, F-75014 Paris (FR)
(74) Mandataire: Ilgart, Jean-Christophe
(86) Numéro de dépôt international: PCT/EP2007/055195
(87) Numéro de publication internationale: WO 2007/138052

(56) Documents cités:
- EP-A- 1 378 304
- WU ET AL: "Tribological behavior of Ti2SnC particulate reinforced copper matrix composites" MATERIALS SCIENCE AND ENGINEERING A: STRUCTURAL MATERIALS: PROPERTIES, MICROSTRUCTURE & PROCESSING, LAUSANNE, CH, vol. 422, no. 1-2, 25 avril 2006 (2006-04-25), pages 266-271, XP005413025 ISSN: 0921-5093
- LECONTE Y ET AL: "Elaboration of SiC, TiC, and ZrC Nanopowders by Laser Pyrolysis: From Nanoparticles to Ceramic Nanomaterials" GLASS PHYSICS AND CHEMISTRY, KLUWER ACADEMIC PUBLISHERS-PLENUM PUBLISHERS, NE, vol. 31, no. 4, 1 juillet 2005 (2005-07-01), pages 510-518, XP019296421 ISSN: 1608-313X

## Description

### DOMAINE TECHNIQUE

La présente invention se rapporte à des poudres nanométriques, en particulier des poudres de phase MAX, ainsi qu'à leur procédé de fabrication.

Les phases MAX représentent une classe exceptionnellement étendue de matériaux. Elles répondent classiquement à la formule générale Mₙ₊₁AXₙ, où M est un métal de transition (tel que Ti, V, Cr, Zr, Nb, Hf ou Ta), A est un élément choisi parmi Cd, Al, Ga, In, Tl, Si, Ge, Sn, Pb, P, As ou S et X est un élément métalloïde choisi parmi B, C ou N.

Cette classe de matériaux est caractérisée par une structure cristalline hexagonale contenant un empilement de couches nanométriques, et une faible proportion d'atomes non métalliques (25%, 33% et 37,5% lorsque n vaut 1, 2 et 3 respectivement).

Ces matériaux possèdent à la fois un caractère métallique et des propriétés proches de celles des céramiques, dans le sens où ils sont aptes à garder leur forme à très hautes températures.

Ils trouvent donc leur application dans des domaines aussi variés que l'électronique (par exemple avec le composé Ti₂SnC), les revêtements autolubrifiants (par exemple, dans l'agroalimentaire), les gabarits de moulage, les pièces de structure dans l'aéronautique.

### ÉTAT DE LA TECHNIQUE ANTÉRIEURE

Les matériaux du type MAX sont obtenus classiquement sous forme de couches minces par dépôt physique en phase vapeur (PVD) ou dépôt chimique en phase vapeur (CVD), soit sous la forme de poudres (par exemple par fusion à l'arc suivi d'un broyage, ou par traitement thermique de poudres élémentaires), soit encore directement sous forme de matériaux massifs en utilisant la métallurgie des poudres comme méthode d'élaboration (par exemple, par frittage de poudres élémentaires).

Ainsi, dès 1967, Jeitschko et Novotny ont élaboré Ti₃SiC₂ en portant à 2000°C pendant 20 minutes des poudres d'hydrure de titane, de silicium et de graphite, et en les refroidissant rapidement à 1200°C.

D'autres auteurs ont réalisé Ti₃SiC₂ par frittage réactif d'un mélange de poudres de Ti, TiC et Si vers 1300-1600°C sous vide. Ce procédé présente l'inconvénient toutefois de générer une vaporisation du silicium conduisant à un décalage de la stoechiométrie. Les tentatives d'ajustement de la proportion initiale de silicium n'ont pas permis d'obtenir du Ti₃SiC₂ pur. Cet échec est généralement imputé à la décomposition de Ti₃SiC₂ à haute température selon le schéma suivant :

Ti₃SiC₂ (s) → 3TiC_{0,67} (s) + Si (g)

D'autres méthodes ont suivi, basées sur l'élimination des produits indésirables par voie chimique après la synthèse. Ainsi, des traitements au fluorure d'hydrogène ont été utilisés pour éliminer TiS₂, une oxydation à 450°C sous air pendant 10 heures pour convertir TiC en TiO₂, puis une dissolution du TiO₂ grâce à un mélange sulfate d'ammonium-acide sulfurique à 100°C. Ces méthodes sont lourdes, et s'accompagnent d'un faible rendement et de sérieux inconvénients vis-à-vis de l'environnement.

Une autre méthode consiste à compacter à froid un mélange de poudres de Ti, Si et C, éventuellement de pratiquer une fusion à l'arc, et de les porter à 900°C pendant 24 heures dans des tubes de quartz préalablement mis sous vide, puis pendant 5 heures à 1400°C ou pendant 100 heures à 1200°C. Dans les deux cas, Ti₃SiC₂ est formé, mais en présence d'autres phases. Au mieux, l'élimination de TiS₂ doit être effectuée à l'acide fluorhydrique à la fin du procédé pour obtenir des poudres de pureté supérieure à 99%.

Enfin, un autre procédé de synthèse de Ti₃SiC₂ consiste à mélanger des poudres (titane, carbure de silicium et graphite) en pratiquant un contrôle strict de la pression partielle d'oxygène lors du traitement de frittage réactif, pour éviter la décomposition du Ti₃SiC₂ selon le mécanisme suivant :

Ti₃SiC₂ (s) + (1/2) O₂ (g) → 3 TiC_{0,67} (s) + SiO(g)

Cependant, ce contrôle nécessite l'utilisation d'un flux de gaz (argon ou hydrogène par exemple), ainsi qu'une poudre sacrificielle servant au piégeage de l'oxygène (titane par exemple), et dont la quantité et l'emplacement demandent à être déterminés par une série d'essais préalables, suivis d'une analyse chimique des produits obtenus. Dans les meilleures conditions, la proportion de composés indésirables peut s'élever à 2% en volume.

Ainsi, d'une manière générale, tous les procédés rapportés pour l'élaboration de matériaux du type MAX sont des procédés qui permettent l'obtention de matériaux massifs et qui partent d'un mélange de poudres contenant les différentes espèces chimiques souhaitées dans le produit final. Cela présente des inconvénients qui nuisent dans une large mesure à la pureté du produit final. En effet, d'une part, la poudre de départ doit être la plus pure possible afin de garantir la pureté du produit final, mais d'autre part, pour permettre une réaction en phase solide rapide, complète et homogène, les différentes poudres doivent être mélangées intimement et donc être fines. Or les poudres métalliques fines sont difficiles à obtenir du fait de leur ductilité et dangereuses à stocker du fait de leur caractère hautement pyrophorique. De plus, elles sont d'autant plus sujettes à l'oxydation donc incompatibles avec une recherche de grande pureté. En outre, le mélange des poudres doit se faire dans des conditions particulières de contrôle de l'atmosphère et des pollutions apportées par le dispositif utilisé pour le broyage. De plus, aucune méthode ne permet donc de s'affranchir des problèmes liés au caractère très local des réactions en phase solide de formation de l'espèce désirée et donc d'éviter que la réaction de formation ne soit hétérogène et susceptible de résulter en un composite contenant d'autres produits que l'espèce désirée.

Qui plus est, aucune méthode jusqu'à présent ne permet l'obtention de poudres nanométriques de taille inférieure à 500 nm, qui permettrait de conférer à la poudre une réactivité de nature à faciliter la consolidation par frittage, d'accéder à des microstructures fines (impossibles à obtenir en partant de poudres classiques) et par là à des propriétés exacerbées. Les poudres nanométriques permettent également d'envisager la fabrication de composites à fibres longues par infiltration d'une suspension de nanoparticules, dont la taille garantit un taux de remplissage élevé des interstices entre les fibres, et par là une faible porosité de la matrice.

Les inventeurs se sont donc fixé comme but de mettre en place un procédé permettant l'obtention de poudres nanométriques, de degré de pureté élevé et qui présentent une taille moyenne de grains inférieure à 500 nm et qui soit simple à mettre en oeuvre et économiquement compatible avec une fabrication à l'échelle industrielle et qui permette une grande souplesse dans le choix de la composition, une grande précision dans la stoechiométrie et une homogénéité à une échelle inférieure au micron.

### EXPOSÉ DE L'INVENTION

Ainsi, l'invention propose, selon un premier objet, une poudre comprenant au moins un élément M, au moins un. élément A et au moins un élément X, dans les proportions respectives (n+1 ± ε₁), 1± ε₂, n ± ε₃ dans lequel :
*A est choisi parmi Cd, Al, Ga, In, Tl, Si, Ge, Sn, Pb, P, As ou S ;
* M est un métal de transition ;
* X est choisi parmi B, C ou N ;
* n est un entier égal à 1, 2 ou 3 ;
* ε₁, ε₂ et ε₃ représentent, indépendamment, un nombre allant de 0 à 0,2 ;
ladite poudre présentant une taille moyenne de grains allant de 10 à 200 nm.

Les éléments M, A et X dans la poudre peuvent se trouver :
- sous forme séparée, c'est-à-dire sous forme non combinée pour former une phase à formule définie ;
- sous forme partiellement combinée, sans former de phase M_{n+1±ε1}A_{1±ε2}X_{n±ε3} ;
- sous forme partiellement combinée avec des zones de phase M_{n+1±ε1}A_{1±ε2}X_{n±ε3} ;
- sous forme totalement combinée en une phase M_{n+1±ε1}A_{1±ε2}X_{n±ε3}.

Elle peut être inférieure à 100 nm, par exemple allant de 10 à 50 nm.

La taille moyenne de grains de la poudre peut être évaluée par deux techniques différentes : la mesure de la surface spécifique par adsorption de gaz (la quantité de gaz adsorbée en surface des grains de poudre sur une couche d'épaisseur monomoléculaire permet de connaître la surface, et connaissant la masse et la densité, on en déduit le diamètre moyen des grains de poudre) et la microscopie électronique en transmission (la poudre est mise en suspension dans un solvant et dispersée par ultrasons, déposée sur un support de microscopie et observée en au moins dix zones ; pour chaque zone, le diamètre de chaque particule visible est évalué généralement de manière automatique grâce à un logiciel de traitement d'image).

Selon l'invention, M est un métal de transition. Par métal de transition, on entend classiquement un métal ayant une sous-couche d incomplètement remplie à l'état d'atome neutre ou dans l'un de leurs états d'oxydation usuel. Ces éléments se répartissent en trois séries de transition :
- la première série de transition allant du scandium au zinc ;
- la deuxième série de transition allant de l'yttrium au cadmium ;
- la troisième série de transition allant du hafnium au mercure.

En particulier, M peut être un élément choisi parmi Sc, Ti, Zr, Hf, V, Nb, Ta, Cr et Mo.

Outre les éléments M, A et X, la poudre peut comprendre des espèces chimiques additionnelles. Les espèces chimiques en question peuvent être présentes dans des proportions ajustables (typiquement jusqu'à 10% en masse par rapport à la masse totale de la poudre) et réparties aussi uniformément que possible, c'est-à-dire à l'échelle de chaque grain. La nature de ces espèces chimiques additionnelles est déterminée par l'application visée. Elles peuvent être, par exemple, des agents de frittage, dont le rôle est de faciliter la consolidation des poudres pour obtenir un matériau massif et dense.

Selon une disposition de l'invention, la poudre de l'invention peut comprendre les éléments M, A et X dans des proportions (n+1), 1 et n.

Par exemple, la poudre de l'invention peut comprendre les éléments M, A et X respectivement dans des proportions 3, 1 et 2, symbolisé par la formule M₃AX₂.

Avantageusement, M peut être Ti, A peut être Si, Al, Ge et X peut être C, les phases correspondantes pouvant être ainsi Ti₃SiC₂, Ti₃AlC₂ et Ti₃GeC₂.

Par exemple, la poudre de l'invention peut comprendre les éléments M, A et X respectivement dans des proportions 2, 1 et 1, symbolisé par la formule M₂AX. A titre d'exemples, on peut citer des poudres correspondant aux phases suivantes :
- lorsque M correspond à Ti, Ti₂AlC, Ti₂AlN, Ti₂InN, Ti₂GeC, Ti₂SC, Ti₂GaN, Ti₂InC, Ti₂TlC, Ti₂SnC, Ti₂GaC, Ti₂CdC, Ti₂PbC ;
- lorsque M correspond à Zr, Zr₂InN, Zr₂SnC, Zr₂SC, Zr₂InC, Zr₂TlC, Zr₂PbC, Zr₂TlN ;
- lorsque M correspond à Hf, Hf₂PbC, Hf₂InN, Hf₂SnN, Hf₂SnC, Hf₂SC, Hf₂TlC, Hf₂InC ;
- lorsque M correspond à Cr, Cr₂GaC, Cr₂AlC, Cr₂GaN ;
- lorsque M correspond à V, V₂AsC, V₂AlC, V₂PC, V₂GaN, V₂GaC, V₂GeC ;
- lorsque M correspond à Nb, Nb₂AlC, Nb₂GaC, Nb₂AsC, Nb₂SnC, Nb₂PC, Nb₂InC, Nb₂SC ;
- lorsque M correspond à Ta, Ta₂AlC, Ta₂GaC ;
- lorsque M correspond à Mo, Mo₂GaC.

Par exemple, la poudre de l'invention peut comprendre également les éléments M, A et X respectivement dans des proportions 4, 1 et 3, symbolisé par la formule M₄AX₃. A titre d'exemples, on peut citer les poudres correspondant à des phases choisies parmi Ti₄AlN₃, Ta₄AlC₃.

Selon un mode particulier de l'invention, M peut être substitué, en partie, par un autre métal de transition ou un autre métal tel que Al, et/ou A peut être substitué, en partie, par un autre élément appartenant à la liste des alternatives pour A mentionnée ci-dessus et/ou X peut être substitué, en partie, par un autre élément appartenant à la liste des alternatives pour X mentionnée ci-dessus.

Des poudres répondant à cette spécificité peuvent des poudres correspondant à des phases choisies parmi (Ti, Zr)₃SiC₂, (Ti, Hf)₃SiC₂, (Ti, Hf)₃(Si, Ge)C₂, (Ti, Zr)₃(Si, Ge)(C, N)₂, (Ti,V)₃SiC₂, (Ti,V)3Si(C,N)₂, Ti₃(Si,Al)C₂, (Ti,V)₃(Si,Ge)(C,N)₂, (Ti,V,Hf)₃(Si,Ge)(C,N)₂, (Ti,V,Hf)₃(Si,Ge,Al)(C,N)₂, (Nb,Ti)₂AlC, TiAlN_{0,5}C_{0,5}. Une formule particulière peut être (Ti_{2,8}Al_{0,2})SiC₂. (Ti,Zr)₃SiC₂ est un composé particulièrement intéressant pour les applications nucléaires.

L'invention a également trait, en second lieu, à un procédé de fabrication d'une poudre telle que définie ci-dessus, qui comprend les étapes suivantes :
a) une étape de mélange, sans chauffage et en l'absence d'oxygène, d'au moins un précurseur de M, d'au moins un précurseur de A et d'au moins un précurseur de X, lesdits précurseurs se trouvant sous forme d'un gaz, d'un solide en suspension dans un gaz et/ou d'un liquide en suspension dans un gaz ;
b) une étape de chauffage dudit mélange obtenu à l'étape a), à une température efficace pour obtenir la formation de la poudre.

Ce procédé permet avantageusement d'obtenir des poudres multiéléments, dont on peut faire varier la composition chimique en faisant varier de façon indépendante les débits de chacun des précurseurs. Qui plus est, grâce à l'étape de mélange se faisant sous forme de gaz, d'un solide en suspension et/ou d'un liquide en suspension dans un gaz suivi d'une étape de chauffage, l'on accède ainsi à l'issue du procédé à des poudres présentant les caractéristiques définies ci-dessus.

Avantageusement, les précurseurs sont mis en contact, dans le cadre de l'étape de mélange, à partir de flux séparés, c'est-à-dire que le mélange s'effectue à partir d'un flux comprenant le précurseur de M, d'un flux comprenant le précurseur de A et d'un flux comprenant le précurseur de X.

Le précurseur de M, c'est-à-dire de métal de transition, peut être un halogénure de M (tel que TiCl₄), un oxyhalogénure de M (tel que CrOCl₂, VOCl₃), un carbonyle de M (tel que Mo(CO)₆), un oxyalkyle de M (tel que [OCH(CH₃]₂]Nb), un borane de M (tel que Zr(BH₄)₄).

Le précurseur de A peut être un hydrure de A (tel que SiH₄, Si₂H₆, GeH₄), un hydrohalogénure de A (tel que SiH₂Cl₂), un complexe alkylé de M (tel que Al(CH₃)₃).

Enfin, le précurseur de X est un précurseur de carbone, de bore ou d'azote.

Des précurseurs de carbone appropriés peuvent être de l'acétylène C₂H₂, de l'éthylène C₂H₄.

Des précurseurs de bore appropriés peuvent être des halogénures de bore (tels que BCl₃), des boranes (tels que B₂H₆, B₄H₆).

Des précurseurs d'azote appropriés peuvent être de l'ammoniac NH₃.

Si les précurseurs de M, A ou X se présentent sous forme d'une poudre ou d'un liquide, ils seront mis avantageusement avant mélange en suspension dans un gaz dit «gaz d'entraînement», pour former les flux appropriés. Dans le cas d'un solide, ils peuvent être aussi mis en solution dans un liquide, lequel liquide sera ensuite mis en suspension dans un gaz d'entraînement, pour former un aérosol. Par gaz d'entraînement, on entend tout gaz qui n'entre pas dans la composition du produit obtenu. Il s'agit, de préférence, d'un gaz neutre, tel que de l'argon, ou d'un gaz qui, bien que participant à la réaction, est intégralement évacué en fin de procédé sous forme gazeuse. La fonction du gaz d'entraînement est de rendre possible le transport des réactifs liquides et solides avec un débit contrôlé.

Lorsque les précurseurs de M se présentent sous forme d'halogénures, ils peuvent être préparés *in-situ* juste avant l'étape a) de mélange.

Plus précisément, les halogénures peuvent être préparés dans un appareil d'halogénation, tel qu'un chlorurateur, qui consiste à soumettre des poudres métalliques de M, à un chauffage en présence d'halogénoacides, à une température efficace pour obtenir les halogénures métalliques de M gazeux correspondants. Cette température est avantageusement inférieure à 1000°C, et de préférence inférieure à 500°C. L'avantage d'utiliser cette préparation *in-situ* est le coût moindre, car les poudres métalliques sont moins chères que les précurseurs classiques.

Par exemple, le précurseur ZrCl₄ peut être préparé en soumettant une poudre métallique de zirconium à des vapeurs d'acide chlorhydrique à une température inférieure à 1000°C.

L'avantage d'introduire les précurseurs sous ce type de forme (à savoir gaz, liquide en suspension, solide en suspension) permet d'assurer un contrôle efficace du débit et un ajustement de la stoechiométrie.

En effet, la formule chimique du précurseur se trouvant sous forme d'un gaz, d'un liquide en suspension ou d'un solide en suspension, permet de connaître la correspondance entre le nombre de moles de l'espèce réactive (M, A ou X) et le nombre de moles de l'élément entrant dans la composition de la poudre (par exemple, chaque mole de gaz C₂H₂ contient 2 moles de carbone). Connaissant le nombre de moles de précurseur par unité de volume à une pression donnée, le contrôle du débit des fluides contenant les précurseurs équivaut au contrôle des proportions d'atomes destinés à former la poudre et donc au contrôle de sa stoechiométrie, évitant ainsi la formation d'espèces secondaires (par exemple TiC, lorsque l'on forme une poudre Ti₃SiC₂).

Lorsqu'une partie de M, A et X est substituée pour former des solutions solides, les précurseurs contenant les éléments substituants sont également introduits sous une forme choisie parmi le gaz, le liquide en suspension, le solide en suspension.

Notons également que lorsque les poudres doivent comprendre à l'issue du procédé des espèces chimiques additionnelles, celles-ci seront, avantageusement, introduites dans l'étape de mélange également sous forme d'un gaz, d'un solide ou d'un liquide en suspension dans un gaz d'entraînement.

Selon l'invention, les différents précurseurs sous forme appropriée (gaz, liquide en suspension, solide en suspension) sont ensuite mélangés, sans chauffage et à l'abri de l'oxygène.

Ce mélange peut se faire dans un réacteur par le simple fait des turbulences générées par l'arrivée des précurseurs dans l'enceinte du réacteur et/ou également par le biais d'un mélangeur présent dans le réacteur. Cette étape de mélange assure une relative homogénéité entre les différents précurseurs. Il est important que ce mélange s'effectue à l'abri de l'oxygène et ce afin de ne pas compromettre la pureté de la poudre obtenue à l'issue du procédé.

Une fois obtenu, le mélange est dirigé, selon l'invention, vers une zone de réaction, où il est porté à une température efficace pour obtenir la formation de la poudre. Cette température peut correspondre à une température nécessaire à la création d'un plasma, lorsque la technique de chauffage utilisée est le chauffage plasma, ou encore une température allant de 1000 à 2000°C, lorsque la technique de chauffage utilisée est le chauffage laser. De telles températures engendrent une réaction très rapide et quasi-instantanée de la poudre et permettent d'éviter que les espèces chimiques les plus volatiles ne s'échappent sous forme gazeuse avant d'avoir pu participer à la réaction. La chaleur dégagée pendant la réaction engendre une agitation moléculaire telle que la fréquence élevée des collisions garantit l'homogénéité chimique du milieu, si tant est que celle-ci n'ait pas été déjà atteinte lors de l'étape précédente de mélange.

L'homme du métier pourra régler les paramètres réactionnels tels que le débit du mélange ou la puissance délivrée par la source de chaleur.

En jouant sur le débit du mélange, qui déterminera le temps de séjour de celui-ci dans la zone de réaction (typiquement de l'ordre de quelques millisecondes), il sera possible d'ajuster la granulométrie de la poudre.

En jouant sur la puissance délivrée par la source de chaleur, il sera possible d'ajuster le taux de cristallinité de la poudre, étant entendu que plus la température sera faible, plus la structure de la poudre formée se rapprochera d'une configuration amorphe, et plus la température sera élevée, plus la structure sera cristalline.

Avantageusement, l'étape de réaction est une étape qui se déroule en flux, à savoir que la poudre formée dans le réacteur est évacué en continu par aspiration, laissant la place au mélange de réactifs entrant. Cette caractéristique permet d'envisager une production de poudre en grande quantité.

Les poudres obtenues selon ce procédé peuvent être utilisées pour constituer des matériaux massifs, qui peuvent être des matériaux monophasés et nanostructurés ou encore des matériaux composites et nanostructurés.

Par matériau monophasé, on entend un matériau comprenant essentiellement une seule phase, laquelle phase comprend, dans le cadre de l'invention, au moins un élément M, au moins un élément A et au moins un élément X, dans les proportions respectives n+1 ± ε₁, 1± ε₂, n ± ε₃, n, ε₁, ε₂ et ε₃ étant tels que définis ci-dessus. Par essentiellement, on entend que la phase constitue au moins 95%, voire 97%, voire encore 99% du matériau.

Par matériau nanostructuré, on entend un matériau comprenant une taille de grains généralement inférieure à 100 nanomètres.

Par matériau composite, on entend un matériau comprenant une matrice dans laquelle sont dispersés des éléments de renforts.

Ainsi, l'invention a trait à un procédé de fabrication d'un matériau monophasé et nanostructuré, comprenant une étape de compression, de préférence à température ambiante, de la poudre telle que définie ci-dessus, et une étape de frittage de façon à consolider le matériau. Pour faciliter le frittage, il pourra être ajouté à la poudre, avant consolidation, un agent de frittage. Notons que cet agent de frittage peut être ajouté également lors de la préparation de la poudre, comme cela est mentionné ci-dessus.

Selon un mode de réalisation particulier de ce procédé, le matériau peut être préparé selon la séquence d'étapes suivantes :
- une étape de compression de la poudre telle que définie ci-dessus, à température ambiante, de préférence à une pression allant de 500 à 1500 MPa, à l'issue de laquelle l'on obtient un premier précompact ;
- une étape de broyage du premier précompact, de façon à obtenir des agglomérats, de préférence de taille micrométrique ;
- une étape de compression, à température ambiante, desdits agglomérats, de préférence à une pression allant de 200 à 400 MPa, à l'issue de laquelle l'on obtient un deuxième précompact ;
- éventuellement une étape d'usinage dudit deuxième précompact, pour lui donner une forme déterminée ;
- une étape de consolidation dudit deuxième précompact par frittage, de préférence à une température allant de 1000 à 2000°C, de préférence allant de 1000 à 1500°C, éventuellement sous une pression allant de préférence de 0 à 200 MPa,
l'ensemble de ces étapes étant réalisé éventuellement à l'abri de l'oxygène.

L'invention a trait aussi à un matériau monophasé et nanostructuré susceptible d'être obtenu par un procédé tel que défini ci-dessus. Pour ces matériaux, du fait qu'ils sont préparés à partir des poudres de l'invention, la composition chimique est homogène à l'échelle de chaque grain, dont la taille peut varier de 5 à 500 nm et dont la distribution de taille est contrôlée et peut être étroite (par exemple, 90% des grains ont une taille comprise entre 20 et 50 nm).

L'invention a trait également à la préparation de matériaux composites.

Différents matériaux composites peuvent être distingués selon l'invention :
- des matériaux composites comprenant une matrice obtenue à partir des poudres de l'invention, dans laquelle sont dispersés des éléments de renfort particulaires (par exemple présentant une taille moyenne de grains de quelques microns à quelques dizaines de microns) ;
- des matériaux composites comprenant une matrice obtenue à partir des poudres de l'invention, dans laquelle sont dispersées, en tant qu'éléments de renforts, des fibres courtes (généralement de longueur inférieure à 1 cm, également appelées whiskers ou trichites), présentant généralement une orientation aléatoire ;
- des matériaux composites comprenant une matrice obtenue à partir des poudres de l'invention et des fibres longues en tant qu'éléments de renfort. Les fibres longues présentent généralement une longueur allant de 1 à plusieurs centimètres (voire présentant une longueur de l'ordre de grandeur de la pièce qu'elles sont destinées à constituer). Elles peuvent former préalablement à la formation du matériau composite une préforme.

Lorsque les éléments de renforts sont des éléments de renfort particulaires et/ou des fibres courtes, le procédé de l'invention comprend généralement une étape de mélange des poudres de l'invention et des éléments de renfort et une étape de frittage.

Selon un mode de réalisation particulier de ce procédé, un tel matériau composite, en particulier lorsque les éléments de renfort sont des fibres courtes, peut être préparé selon la séquence d'étapes suivantes :
- une étape de compression, à température ambiante, de la poudre conforme à l'invention à une pression allant, de préférence, de 500 à 1500 MPa, à l'issue de laquelle l'on obtient un premier précompact ;
- une étape de broyage du premier précompact, de façon à obtenir des agglomérats, de préférence de taille micrométrique ;
- une étape de mélange desdits agglomérats avec les éléments de renfort ;
- une étape de compression, à température ambiante dudit mélange de préférence à une pression allant de 200 à 400 MPa, à l'issue de laquelle l'on obtient un deuxième précompact ;
- éventuellement une étape d'usinage dudit deuxième précompact, pour lui donner une forme déterminée ;
- une étape de consolidation dudit deuxième précompact par frittage, de préférence à une température allant de 1000 à 2000°C, de préférence de 1000 à 1500°C, éventuellement sous une pression allant de préférence de 0 à 200 MPa,
l'ensemble de ces étapes étant réalisé de préférence à l'abri de l'oxygène.

En particulier, les éléments de renforts peuvent être des particules ou des fibres courtes de carbone, de carbure de silicium SiC, ou d'autres céramiques (oxydes, carbures, nitrures, oxycarbures, carbonitrures, siliciures ou borures) telles que l'alumine. On précise que par fibres courtes (ou whiskers ou encore trichites), on entend généralement des monocristaux fibreux, présentant notamment d'excellentes propriétés mécaniques en matière de module élastique et de résistance à la traction.

L'invention a trait aussi à un matériau composite nanostructuré susceptible d'être obtenu par un procédé tel que défini ci-dessus.

Lorsque les éléments de renforts sont des fibres longues, le procédé de préparation de matériaux composites comprend généralement une étape de mise en suspension des poudres conformes à l'invention, une étape d'infiltration par ladite suspension d'une préforme constituée desdites fibres longues et une étape de frittage de façon à consolider le matériau.

Selon un mode de réalisation particulier de ce procédé, un tel matériau composite peut être préparé selon la séquence d'étapes suivantes :
- une étape de mise en suspension des poudres conformes à l'invention dans un milieu aqueux ou organique, en utilisant éventuellement des agents dispersants et/ou liants et en soumettant éventuellement ladite suspension à des ultrasons afin de dissocier les éventuels agglomérats ;
- une étape d'infiltration d'une préforme constituée par des fibres longues, éventuellement tissées, ladite étape d'infiltration pouvant être effectuée par électrophorèse ou par infiltration sous pression ;
- une étape de séchage de l'ensemble obtenu après infiltration ;
- une étape de consolidation dudit ensemble obtenu après séchage, par frittage, de préférence à une température allant de 1000 à 2000°C, de préférence de 1000 à 1500°C, éventuellement sous une pression allant de préférence de 0 à 200 MPa,
l'ensemble de ces étapes étant réalisé de préférence à l'abri de l'oxygène.

Lorsque le frittage est réalisé sous pression, celle-ci est avantageusement appliquée perpendiculairement au tissage des fibres, afin de ne pas les endommager.

Les éléments de renfort peuvent être des fibres longues de carbone, de carbure de silicium SiC, de céramiques (oxydes, carbures, nitrures, oxycarbures, carbonitrures, siliciures ou borures), tel que l'alumine.

L'invention a trait aussi à un matériau composite nanostructuré susceptible d'être obtenu par un procédé tel que défini ci-dessus.

Les matériaux composites, quelle que soit la nature de leurs éléments de renfort, peuvent trouver leur application dans tous les domaines impliquant la mise en oeuvre de matériaux réfractaires, comme l'industrie nucléaire ou encore l'aéronautique.

### BRÈVE DESCRIPTION DES DESSINS

La figure unique illustre un dispositif permettant la mise en oeuvre du mode de réalisation exemplifié dans l'exemple.

### EXPOSÉ DÉTAILLÉ DE MODES DE RÉALISATION PARTICULIERS

### EXEMPLE 1

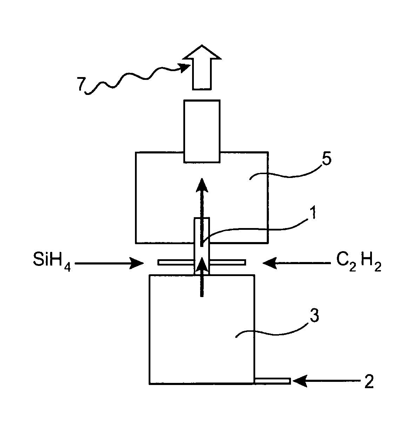

Cet exemple illustre la préparation de la poudre Ti₃SiC₂ par pyrolyse laser dans un dispositif représenté sur la figure 1.

Les précurseurs de silicium, de carbone et de titane sont respectivement l'hydrure de silicium SiH₄, l'acétylène C₂H₂ et le tétrachlorure de titane TiCl₄.

Les précurseurs susmentionnés sont introduits dans une enceinte de mélange référencée 1 dans les proportions respectives 1, 1 et 3, SiH₄ et C₂H₂ étant sous forme de gaz et TiCl₄ sous forme de vapeur obtenue dans un évaporateur référencé 3 présentant une entrée de gaz neutre référencée 2. Le mélange obtenu est acheminé vers un réacteur de pyrolyse laser 5, où la pression est de 900 mbar et la température de la flamme est comprise entre 1000 et 2000°C et présentant une sortie référencée 7 pour l'évacuation des poudres formées. La canalisation acheminant les vapeurs de TiCl₄ jusqu'au réacteur est maintenue à une température de 150°C afin d'éviter la recondensation des vapeurs. Le respect des proportions 1, 1 et 3, par simple ajustement du débit d'entrée des réactifs, garantit la production de poudres nanométriques de stoechiométrie Ti₃SiC₂. Dans cette poudre, on peut observer que des éléments Ti, Si et C sont répartis uniformément à l'échelle nanométrique voire atomique. En prenant des débits respectifs de 1,5, 1,5 et 4,5 l/min respectivement pour SiH₄, C₂H₂ et TiCl₄, le taux de production s'élève à 600 g/h de Ti₃SiC₂.

La taille de particules des poudres obtenues est inférieure à 100 nm.

### EXEMPLE 2

Cet exemple illustre la préparation d'une poudre de Ti₂SnC par pyrolyse laser dans un dispositif conforme à celui représenté sur la figure unique.

Les précurseurs de titane, d'étain et de carbone sont respectivement le tétrachlorure de titane TiCl₄, le tétrachlorure d'étain SnCl₄ et l'acétylène C₂H₂.

De la même manière que précédemment, les précurseurs susmentionnés sont introduits dans les proportions respectives 2, 1 et ½.

### EXEMPLE 3

Cet exemple illustre la préparation d'une poudre de Ti₄AlC₃ par pyrolyse laser dans un dispositif conforme à celui représenté sur la figure unique.

Les précurseurs de titane, d'aluminium et de carbone sont respectivement le tétrachlorure de titane TiCl₄, le trichlorure d'aluminium AlCl₃ et l'acétylène C₂H₂.

De la même manière que précédemment, les précurseurs susmentionnés sont introduits dans les proportions respectives 4, 1 et 3/2.

## Revendications

1. Poudre comprenant au moins un élément M, au moins un élément A et au moins un élément X, dans les proportions respectives (n+1 ± ε₁), 1± ε₂, n ± ε₃ dans lequel :
*A est choisi parmi Cd, Al, Ga, In, Tl, Si, Ge, Sn, Pb, P, As ou S ;
* M est un métal de transition ;
* X est choisi parmi B, C ou N ;
* n est un entier égal à 1, 2 ou 3 ;
* ε₁, ε₂ et ε₃ représentent indépendamment un nombre allant de C à 0,2 ;
ladite poudre présentant une taille moyenne de grains allant de 10 à 200 nm.

2. Poudre selon la revendication 1, dans laquelle la poudre présente une taille moyenne de grains inférieure à 100 nm.

3. Poudre selon la revendication 1, dans laquelle la poudre présente une taille moyenne de grains allant de 10 à 50 nm.

4. Poudre selon l'une quelconque des revendications 1 à 3, dans laquelle les éléments M, A et X sont respectivement dans des proportions 3, 1 et 2,ladite poudre correspondant à une phase choisie parmi Ti₃SiC₂, Ti₃AlC₂, Ti₃GeC₂.

5. Poudre selon l'une quelconque des revendications 1 à 3, dans laquelle les éléments M, A et X sont respectivement dans des proportions 2, 1 et 1, ladite poudre correspondant à une phase choisie parmi Ti₂AlC, Ti₂AlN, Ti₂InN, Ti₂GeC, Ti₂SC, Ti₂GaN, Ti₂InC, Ti₂TlC, Ti₂SnC, Ti₂GaC, Ti₂CdC, Ti₂PbC, Zr₂InN, Zr₂SnC, Zr₂SC, Zr₂InC, Zr₂TlC, Zr₂PbC, 2r₂TlN, Hf₂PbC, Hf₂InN, Hf₂SnN, Hf₂SnC, Hf₂SC, Hf₂TlC, Hf₂Inc, Cr₂GaC, Cr₂AlC, Cr₂GaN, V₂AsC, v₂AlC, V₂PC, V₂GaN, V₂Gac, V₂GeC, Nb₂AlC, Nb₂GaC, Nb₂AsC, Nb₂SnC, Nb₂PC, Nb₂InC, Nb₂SC, Ta₂Alc, Ta₂GaC, Mc₂GaC, Nb₂SC.

6. Poudre selon l'une quelconque des revendications 1 à 3, dans laquelle les éléments M, A et X sont respectivement dans des proportions 4, 1 et 3, ladite poudre correspondant à une phase choisie parmi Ti₄AlN₃, Ta₄AlC₃.

7. Poudre selon la revendication 1, dans laquelle M est substitué, en partie, par un autre métal de transition ou un autre métal et/ou A est substitué, en partie, par un autre élément appartenant à la liste des alternatives pour A mentionnée à la revendication 1 et/ou X est substitué, en partie, par un autre élément appartenant à la liste des alternatives pour X mentionnée à la revendication 1.

8. Poudre selon la revendication 7, dans laquelle la poudre correspond à une phase choisie parmi (Ti,Zr)₃SiC₂, (Ti,Hf)₃SiC₂, (Ti,Hf)₃(Si,Ge)C₂, (Ti,Zr)₃(Si,Ge)(C,N)₂, (Ti,V)₃SiC₂, (Ti,V)₃Si(C,N)₂, Ti₃(Si,Al)C₂, (Ti,V)₃(Si,Ge)(C,N)₂, (Ti,V,Hf)₃(Si,Ge)(C,N)₂, (Ti,V,Hf)₃(Si,Ge,Al)(C,N)₂, (Nb,Ti)₂AlC, TiAlN_{0,5}C_{0,5}.

9. Procédé de fabrication d'une poudre telle que définie à la revendication 1, qui comprend les étapes suivantes :
a) une étape de mélange, sans chauffage et en l'absence d'oxygène, d'au moins un précurseur de M, d'au moins un précurseur de A et d'au moins un précurseur de X, lesdits précurseurs se trouvant sous forme d'un gaz, d'un solide en suspension dans un gaz et/ou d'un liquide en suspension dans un gaz ;
b) une étape de chauffage dudit mélange obtenu à l'étape a), à une température efficace pour obtenir la formation de la poudre.

10. Procédé de fabrication selon la revendication 9, dans lequel l'étape de mélange s'effectue à partir d'un flux comprenant le précurseur de M, d'un flux comprenant le précurseur de A et d'un flux comprenant le précurseur de X.

11. Procédé de fabrication selon la revendication 9 ou 10, dans lequel le précurseur de M est choisi parmi les halogénures de M, les oxyhalogénures de M, les carbonyles de M, les oxyalkyles de M, les boranes de M.

12. Procédé de fabrication selon l'une quelconque des revendications 9 à 11, dans lequel le précurseur de A est choisi parmi les hydrures de A, les hydrohalogénures de A, les complexes alkylés de M.

13. Procédé de fabrication selon l'une quelconque des revendications 9 à 12, dans lequel le précurseur de carbone est choisi parmi l'acétylène C₂H₂, l'éthylène C₂H₄.

14. Procédé de fabrication selon l'une quelconque des revendications 9 à 13, dans lequel le précurseur de bore est choisi parmi les halogénures de bore, les boranes.

15. Procédé de fabrication selon l'une quelconque des revendications 9 à 14, dans lequel le précurseur d'azote est NH₃.

16. Procédé de fabrication selon la revendication 9, comprenant avant l'étape a), lorsque le précurseur de M est un halogénure de M, une étape de préparation dudit précurseur consistant à soumettre une poudre métallique de M à un chauffage en présence d'halogénoacides à une température efficace pour obtenir l'halogénure de M correspondant.

17. Procédé de fabrication selon l'une quelconque des revendications 9 à 16, dans lequel l'étape de chauffage est réalisée à une température nécessaire à la création d'un plasma ou une température allant de 1000 à 2000°C.

18. Procédé de fabrication d'un matériau monophasé et nanostructuré, comprenant une étape de compression d'une poudre telle que définie selon l'une quelconque des revendications 1 à 8 et une étape de frittage de façon à consolider le matériau.

19. Procédé de fabrication d'un matériau composite ayant pour éléments de renfort des éléments de renfort particulaires et/ou des fibres courtes, comprenant une étape de mélange des poudres telles que définies selon l'une quelconque des revendications 1 à 8 et des éléments de renfort et une étape de frittage.

20. Procédé de fabrication selon la revendication 19, dans lequel le(les) élément(s) de renfort est (sont) choisi(s) parmi les particules ou fibres courtes de carbone, de carbure de silicium SiC, ou d'autres céramiques.

21. Procédé de fabrication d'un matériau composite ayant pour éléments de renfort des fibres longues comprenant une étape de mise en suspension des poudres telles que définies selon l'une quelconque des revendications 1 à 8, une étape d'infiltration par ladite suspension d'une préforme constituée desdites fibres longues et une étape de frittage de façon à consolider le matériau.

## Claims

1. Powder comprising at least one element M, at least one element A and at least one element X, in the respective proportions (n+1±ε₁), 1±ε₂ and n±ε₃, in which:
* A is chosen from Cd, Al, Ga, In, Tl, Si, Ge, Sn, Pb, P, As and S;
* M is a transition metal;
* X is chosen from B, C and N;
* n is an integer equal to 1, 2 or 3; and
* ε₁, ε₂ and ε₃ independently represent a number ranging from 0 to 0.2,
said powder having a mean particle size ranging from 10 to 200 nm.

2. Powder according to Claim 1, in which the powder has a mean particle size of less than 100 nm.

3. Powder according to Claim 1, in which the powder has a mean particle size ranging from 10 to 50 nm.

4. Powder according to any one of Claims 1 to 3, in which the elements M, A and X are in proportions of 3, 1 and 2 respectively, said powder corresponding to a phase chosen from Ti₃SiC₂, Ti₃AlC₂ and Ti₃GeC₂.

5. Powder according to any one of Claims 1 to 3, in which the elements M, A and X are in proportions of 2, 1 and 1 respectively, said powder corresponding to a phase chosen from: Ti₂AlC, Ti₂AlN, Ti₂InN, Ti₂GeC, Ti₂SC, Ti₂GaN, Ti₂InC, Ti₂TlC, Ti₂SnC, Ti₂GaC, Ti₂CdC, Ti₂PbC, Zr₂InN, Zr₂SnC, Zr₂SC, Zr₂InC, Zr₂TlC, Zr₂PbC, Zr₂TlN, Hf₂PbC, Hf₂InN, Hf₂SnN, Hf₂SnC, Hf₂SC, Hf₂TlC, Hf₂InC, Cr₂GaC, Cr₂AlC, Cr₂GaN, V₂AsC, V₂AlC, V₂PC, V₂GaN, V₂GaC, V₂GeC, Nb₂AlC, Nb₂GaC, Nb₂AsC, Nb₂SnC, Nb₂PC, Nb₂InC, Nb₂SC, Ta₂AlC, Ta₂GaC, Mo₂GaC and Nb₂SC.

6. Powder according to any one of Claims 1 to 3, in which the elements M, A and X are in proportions of 4, 1 and 3 respectively, said powder corresponding to a phase chosen from Ti₄AlN₃ and Ta₄AlC₃.

7. Powder according to Claim 1, in which M is partially substituted with another transition metal or another metal and/or A is partially substituted with another element belonging to the list of alternatives for A mentioned in Claim 1 and/or X is partially substituted with another element belonging to the list of alternatives for X mentioned in Claim 1.

8. Powder according to Claim 7, in which the powder corresponds to a phase chosen from: (Ti,Zr)₃SiC₂, (Ti,Hf)₃SiC₂, (Ti,Hf)₃(Si,Ge)C₂, (Ti,Zr)₃(Si,Ge)(C,N)₂, (Ti,V)₃SiC₂, (Ti,V)₃Si(C,N)₂, Ti₃(Si,Al)C₂, (Ti,V)₃(Si,Ge)(C,N)₂, (Ti,V,Hf)₃(Si,Ge)(C,N)₂, (Ti,V,Hf)₃(Si,Ge,Al)(C,N)₂, (Nb,Ti)₂AlC and TiAlN_{0.5}C_{0.5}.

9. Process for manufacturing a powder as defined in Claim 1, which comprises the following steps:
a) a mixing step, with no heating and in the absence of oxygen, in which at least one precursor of M, at least one precursor of A and at least one precursor of X are mixed together, said precursors being in the form of a gas, a solid in suspension in a gas and/or a liquid in suspension in a gas; and
b) a heating step, in which said mixture obtained in step a) is heated to a temperature effective for forming the powder.

10. Manufacturing process according to Claim 9, in which the mixing step is carried out from a stream comprising the precursor of M, a stream comprising the precursor of A and a stream comprising the precursor of X.

11. Manufacturing process according to Claim 9 or 10, in which the precursor of M is chosen from M halides, M oxyhalides, M carbonyls, M oxyalkyls and M boranes.

12. Manufacturing process according to any one of Claims 9 to 11, in which the precursor of A is chosen from A hydrides, A hydrohalides and alkylated M complexes.

13. Manufacturing process according to any one of Claims 9 to 12, in which the carbon precursor is chosen from acetylene (C₂H₂) and ethylene (C₂H₄).

14. Manufacturing process according to any one of Claims 9 to 13, in which the boron precursor is chosen from boron halides and boranes.

15. Manufacturing process according to any one of Claims 9 to 14, in which the nitrogen precursor is NH₃.

16. Manufacturing process according to Claim 9, which includes, before step a), when the precursor of M is an M halide, a step of preparing said precursor, consisting in heating a metal powder of M in the presence of haloacids at a temperature effective for obtaining the corresponding M halide.

17. Manufacturing process according to any one of Claims 9 to 16, in which the heating step is carried out at a temperature necessary for creating a plasma or a temperature ranging from 1000 to 2000°C.

18. Process for manufacturing a nanostructured single-phase material, which includes a step of compressing a powder as defined in any one of Claims 1 to 8 and a sintering step so as to consolidate the material.

19. Process for manufacturing a composite having, for reinforcing elements, particulate reinforcing elements and/or short fibres, which includes a step of mixing the powders as defined in any one of Claims 1 to 8 with the reinforcing elements and a sintering step.

20. Manufacturing process according to Claim 19, in which the reinforcing element(s) is(are) chosen from particles or short fibres of carbon, silicon carbide (SiC) or other ceramics.

21. Process for manufacturing a composite having, as reinforcing elements, long fibres, which includes a step of suspending the powders as defined in any one of Claims 1 to 8, a step of infiltrating a preform consisting of said long fibres with said suspension, and a sintering step so as to consolidate the composite.

## Patentansprüche

1. Pulver, umfassend mindestens ein Element M, mindestens ein Element A und mindestens ein Element X, in den Anteilen von jeweils (n+1 ± ε₁), 1 ± ε₂, n ± ε₃, worin:
* A ausgewählt ist aus Cd, Al, Ga, In, Tl, Si, Ge, Sn, Pb, P, As oder S;
* M ein übergangsmetall ist,;
* X ausgewählt ist aus B, C oder N;
* n eine ganze Zahl gleich 1, 2 oder 3 ist;
* ε₁, ε₂ und ε₃ unabhängig eine Zahl von 0 bis 0,2 ist;
worin das Pulver eine mittlere Korngröße von 10 bis 200 nm aufweist.

2. Pulver nach Anspruch 1, worin das Pulver eine mittlere Korngröße von 100 nm aufweist.

3. Pulver nach Anspruch 1, worin das Pulver eine mittlere Korngröße von 10 bis 50 nm aufweiset.

4. Pulver nach einem der Ansprüche 1 bis 3, worin die Elemente M, A und X jeweils in den Anteilen 3, 1 und 2 vorliegen, worin das Pulver einer Phase entspricht, ausgewählt aus Ti₃SiC₂, Ti₃AlC₂, Ti₃GeC₂.

5. Pulver nach einem der Ansprüche 1 bis 3, worin die Elemente M, A und X jeweils in den Anteilen 2, 1 und 1 vorliegen, worin das Pulver einer Phase entspricht, ausgewählt aus Ti₂AlC, Ti₂AlN, Ti₂InN, Ti₂GeC, Ti₂SC, Ti₂GaN, Ti₂InC, Ti₂TlC, Ti₂SnC, Ti₂GaC, Ti₂CdC, Ti₂PbC, Zr₂InN, Zr₂SnC, Zr₂SC, Zr₂InC, Zr₂TlC, Zr₂PbC, Zr₂TlN, Hf₂PbC, Hf₂InN, Hf₂SnN, Hf₂SnC, Hf₂SC, Hf₂TlC, Nf₂InC, Cr₂GaC, Cr₂AlC, Cr₂GaN, V₂AsC, V₂AlC, V₂PC, V₂GaN, V₂GaC, V₂GeC, Nb₂AlC, Nb₂GaC, Nb₂AsC, Nb₂SnC, Nb₂PC, Nb₂InC, Nb₂SC, Ta₂AlC, Ta₂GaC, Mo₂GaC, Nb₂SC.

6. Pulver nach einem der Ansprüche 1 bis 3, worin die Elemente M, A und X jeweils in den Anteilen 4, 1 und 3 vorlieben, worin das Pulver einer Phase entspricht, ausgewählt aus Ti₄AlN₃, Ta₄AlC₃.

7. Pulver nach Anspruch 1, worin M teilweise substituiert ist durch ein anderes übergangsmetall oder ein anderes Metall und/oder A teilweise substituiert ist durch ein anderes Element, das zu der Liste von Alternativen für A gehört, die in Anspruch 1 genannt sind, und/oder worin X teilweise substituiert ist durch ein anderes Element, das zu der Liste von Alternativen für X gehört, die in Anspruch 1 genannt sind.

8. Pulver nach Anspruch 7, worin das Pulver einer Phase entspricht, ausgewählt aus (Ti, Zr)₃SiC₂, (Ti, Hf)₃SiC₂, (Ti, Hf)₃(Si, Ge)C₂, (Ti, Zr)₃(Si, Ge)(C, N)₂, (Ti, V)₃SiC₂, (Ti, V)₃Si(C, N)₂, Ti₃(Si, Al)C₂, (Ti, V)₃(Si, Ge)(C, N)₂, (Ti, V, Hf)₃(Si, Ge)(C, N)₂, (Ti, V, Hf)₃(Si, Ge, Al)(C, N)₂, (Nb, Ti)₂AlC, TiAlN_{0,5}C_{0,5}.

9. Verfahren zum Herstellen eines Pulvers wie in Anspruch 1 definiert, umfassend die folgenden Schritte:
a) einen Mischschritt, ohne Erwärmung und in Abwesenheit von Sauerstoff, mindestens eines Vorläufers von M, mindestens eines Vorläufers von A und mindestens eines Vorläufers von X, worin die Vorläufer in Form eines Gases, eines Feststoffs in Suspension in einem Gas und/oder einer Flüssigkeit in Suspension in einem Gas sind;
b) einen Erwärmungsschritt der Mischung, die in Schritt a) erhalten wird, bei einer Temperatur, die geeignet ist, um die Bildung des Pulvers zu erreichen.

10. Verfahren zur Herstellung nach Anspruch 9, worin der Mischschritt erfolgt, ausgehend einem Fluss, umfassend den Vorläufer von M, einem Fluss, umfassend den Vorläufer von A und einem Fluss, umfassend den Vorläufer von X.

11. Verfahren zur Herstellung nach Anspruch 9 oder 10, worin der Vorläufer von M ausgewählt wird aus den Halogeniden von M, den Oxyhalogeniden von M, den Carbonylen von M, den Oxyalkylen von M, den Boranen von M.

12. Verfahren zur Herstellung nach einem der Ansprüche 9 bis 11, worin der Vorläufer von A ausgewählt wird aus den Hydriden von A, den Hydrohalogeniden von A, den alkylierten Komplexen von M.

13. Verfahren zur Herstellung nach einem der Ansprüche 9 bis 12, worin der Kohlenstoff Vorläufer ausgewählt wird aus Acetylen C₂H₂, Ethylen C₂H₄.

14. Verfahren zur Herstellung nach einem der Ansprüche 9 bis 13, worin der Bor-Vorläufer ausgewählt wird aus Borhalogeniden, den Boranen.

15. Verfahren zur Herstellung nach einem der Ansprüche 9 bis 14, worin der Sickstoff-Vorläufer NH₃ ist.

16. Verfahren zur Herstellung nach Anspruch 9, umfassend vor Schritt a), wenn der Vorläufer von M ein Halogenid von M ist, einen Schritt der Herstellung des Vorläufers, der darin besteht, dass ein metallisches Pulver von M einer Erwärmung in Gegenwert von Halogensäuren unterzogen wird, bei einer Temperatur, die geeignet ist, um das entsprechende Halogenid von M zu erhalten.

17. Verfahren zur Herstellung nach einem der Ansprüche 9 bis 16, worin der Erwärmungsschritt bei einer Temperatur erfolgt, die erforderlich zur Bindung eines Plasmas oder einer Temperatur, die von 1000 bis 2000 °C ist.

18. Verfahren zur Herstellung eines Materials mit Monophase und Nanostruktur, umfassend einen Kompressionsschritt eines Pulvers wie nach einem der Ansprüche 1 bis 8 definiert, und einen Sinterschritt, um das Material zu verfestigen.

19. Verfahren zur Herstellung eines Verbundmaterials, das als Verstärkungselemente teilchenförmige Verstärkungselemente und/oder kurze Fasern aufweist, umfassend einen Schritt des Mischens von Pulvern wie in einem der Ansprüche 1 bis 8 definiert und von Verstärkungselementen und einen Sinterschritt.

20. Verfahren zur Herstellung nach Anspruch 19, worin das (die) Verstärkungselement (Verstärkungselemente) ausgewählt ist (sind) aus Teilchen oder kurzen Fasern aus Kohlenstoff, Siliziumcarbid SiC oder anderen Keramiken.

21. Verfahren zur Herstellung eines Verbundmaterials, das als Verstärkungselemente lange Fasern aufweist, umfassend einen Schritt des Suspendierens von Pulvern wie in einem der Ansprüche 1 bis 8 definiert, einen Schritt des Einsickerns der Suspension in eine Vorform, die aus den langen Fasern besteht, und einen Schritt des Sinterns, um das Material zu verfestigen.
